# EUROPEAN PATENT APPLICATION

(11) **EP 3 381 859 A1**
(43) Date of publication of application: **03.10.2018**
(21) Application number: 17305387.7
(22) Date of filing: 31.03.2017
(51) Int. Cl.: B66B 11/02, E04F 19/04

(54) **ELEVATOR CAR WALL PANEL SECURING SYSTEM**

(71) Applicant: Otis Elevator Company, Farmington CT 06032 (US)
(72) Inventor: FAUCONNET, Aurélien, 45500 Gien (FR); BEAUCHAUD, Frédéric, 45500 Gien (FR)
(74) Representative: Schmitt-Nilson Schraud Waibel Wohlfrom Patentanwälte Partnerschaft mbB

(57) **Abstract**

Panel securing assemblies for an elevator car and elevator cars having panel securing assemblies that include a body with a first end and a second end, a fastener attachment structure located at the first end and configured to engage with a wall panel and a frame of an elevator car, and an engagement attachment structure located at the second end and configured to engage with the frame of the elevator car. The body defines a corner surface within the elevator car when installed to the wall panel and frame.

## Description

### BACKGROUND

The subject matter disclosed herein generally relates to elevator car wall panels and, more particularly, elevator car wall panel systems having panel securing assemblies that secure elevator car wall panels to elevator car frames.

Elevator cars include structural frames to support the weight of the elevator car and passengers therein. The structural frames may not be aesthetically pleasing and thus wall panels may be installed to the structural frames to define (an) interior wall(s) of the elevator car. Such wall panels can be fixedly secured to the structural frames using fasteners to securely retain the wall panels against the structural frame. Such installations may be difficult to change out and/or perform maintenance on because a technician may be required to enter the elevator hoistway to release the wall panels from engagement with the structural frame. Thus, it may be advantageous to provide wall panels with easier installation and/or removal.

### SUMMARY

According to some embodiments, panel securing assemblies for elevator cars are provided. The panel securing assemblies include a body with a first end and a second end, a fastener attachment structure located at the first end and configured to engage with a wall panel and a frame of an elevator car, and an engagement attachment structure located at the second end and configured to engage with the frame of the elevator car. The body defines a corner surface within the elevator car when installed to the wall panel and frame.

In addition to one or more of the features described herein, or as an alternative, further embodiments of the panel securing assembly may include that the fastener attachment structure includes a fastener support and a fastener passing through the fastener support, the fastener engageable with the frame.

According to some embodiments, elevator cars are provided having an elevator car frame having a first frame portion and a second frame portion, wherein the first and second frame portions define a corner of the elevator car, a wall panel removably attachable to the elevator car frame, and a panel securing assembly as described herein.

In addition to one or more of the features described herein, or as an alternative, further embodiments of the elevator car may include that the wall panel includes a first subpanel and a second subpanel, and wherein the panel securing assembly removably fixes the first subpanel to the first frame portion.

In addition to one or more of the features described herein, or as an alternative, further embodiments of the elevator car may include that the panel securing assembly removably fixes the second subpanel to the second frame portion.

In addition to one or more of the features described herein, or as an alternative, further embodiments of the elevator car may include that the elevator car frame comprises a third frame portion, the first and third frame portions defining a second corner of the elevator car. The elevator car further includes a second panel securing assembly, the second panel securing assembly removably attaching the second subpanel to the first frame portion. The second panel securing assembly includes a second assembly body with a first end and a second end, a second assembly fastener attachment structure located at the first end of the second assembly and configured to engage with the second subpanel and the first frame portion, and a second assembly engagement attachment structure located at the second end of the second assembly and configured to engage with the third frame portion. The second assembly body defines a second corner surface within the elevator car when installed to the second subpanel and the third frame portion.

In addition to one or more of the features described herein, or as an alternative, further embodiments of the elevator car may include that the second frame portion includes a positioning element, the engagement attachment structure engageable with the positioning element.

In addition to one or more of the features described herein, or as an alternative, further embodiments of the elevator car may include that the engagement attachment structure includes an alignment feature that engages with the positioning element.

In addition to one or more of the features described herein, or as an alternative, further embodiments of the elevator car may include that the body is curved to define a curved corner surface of the elevator car.

In addition to one or more of the features described herein, or as an alternative, further embodiments of the elevator car may include that the wall panel includes a panel flange, the fastener attachment structure engageable with the panel flange to secure the wall panel to the first frame portion.

Technical effects of embodiments of the present disclosure include systems for fixedly attached elevator car wall panels to elevator car frames while providing aesthetic corners in the elevator cars.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is a schematic illustration of an elevator system that may employ various embodiments of the present disclosure;
FIG. 2A is an elevation schematic illustration of an elevator car wall panel that can employ embodiments disclosed herein;
FIG. 2B is an elevation schematic illustration of another elevator car wall panel that can employ embodiments disclosed herein;
FIG. 3A is a schematic illustration of an elevator car having panel securing assemblies in accordance with an embodiment of the present disclosure;
FIG. 3B is a schematic illustration of the elevator car of FIG. 3A with a panel securing assembly removed to allow opening of an elevator wall panel;
FIG. 4A is a schematic illustration of panel securing assemblies of the present disclosure securing an elevator car wall panel in a closed position;
FIG. 4B is a schematic illustration showing removal of one panel securing assembly to allow opening of a portion of the elevator car wall panel of FIG. 4A;
FIG. 4C illustrates a portion of the elevator car wall panel of FIGS. 4A-4B in an open position;
FIG. 5A is an enlarged schematic illustration of a portion of a panel securing assembly in accordance with an embodiment of the present disclosure;
FIG. 5B is an illustration of the panel securing assembly of FIG. 5A removed from securing a panel of an elevator car; and
FIG. 5C is an isometric schematic illustration of a panel securing assembly in accordance with the embodiment of FIGS. 5A-5B.

### DETAILED DESCRIPTION

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "##" that is shown in FIG. X may be labeled "X##" and a similar feature in FIG. Z may be labeled "Z##." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

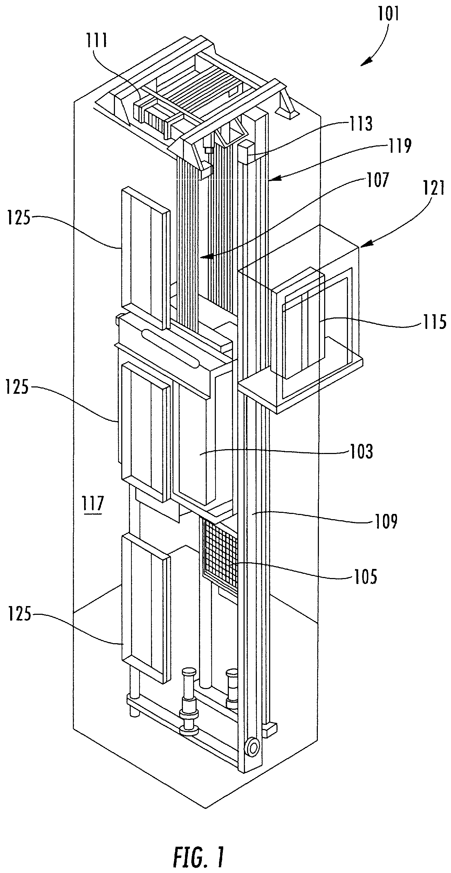

FIG. 1 is a perspective view of an elevator system 101 including an elevator car 103, a counterweight 105, a roping 107, a guide rail 109, a machine 111, a position encoder 113, and a controller 115. The elevator car 103 and counterweight 105 are connected to each other by the roping 107. The roping 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The roping 107 engages the machine 111, which is part of an overhead structure of the elevator system 101. The machine 111 is configured to control movement between the elevator car 103 and the counterweight 105. The position encoder 113 may be mounted on an upper sheave of a speed-governor system 119 and may be configured to provide position signals related to a position of the elevator car 103 within the elevator shaft 117. In other embodiments, the position encoder 113 may be directly mounted to a moving component of the machine 111, or may be located in other positions and/or configurations as known in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position encoder 113. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor.

Although shown and described with a roping system, elevator systems that employ other methods and mechanisms of moving an elevator car within an elevator shaft may employ embodiments of the present disclosure. FIG. 1 is merely a non-limiting example presented for illustrative and explanatory purposes.

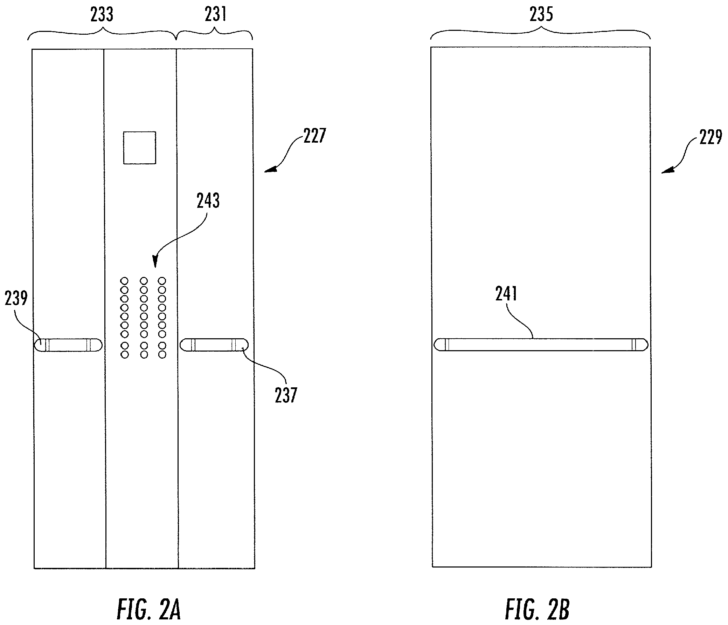

Turning to FIGS. 2A and 2B, schematic illustrations of elevator car wall panels 227, 229 that can employ embodiments described herein are shown. FIG. 2A shows a front elevation schematic view of a first elevator car wall panel 227. FIG. 2B shows a front elevation schematic view of a second elevator car wall panel 229. The first elevator car wall panel 227, as shown, includes two subpanels 231, 233, wherein a first subpanel 231 forms about a third of the elevator car wall panel 227 and the second subpanel 233 forms about two-thirds of the elevator car wall panel 227. That is, the first subpanel 231 and the second subpanel 233 are configured to form a wall of an elevator car. The two subpanels 231, 233, in some configurations, are parts of a solid or continuous elevator car wall panel, and thus are fixedly connected or are subparts of a continuous wall. The second elevator car wall panel 229 is formed with a single subpanel 235.

As shown, the first subpanel 231 of the first elevator car wall panel 227 includes an associated first handrail 237 and the second subpanel 233 includes an associated second handrail 239. The second elevator car wall panel 229 includes a third handrail 241. The handrails 237, 239, 241 are mounted to the respective subpanels 231, 233, 235 of the elevator car wall panels 227, 229 and provide users or passengers of the elevator to have a handrail to provide support or other function. Accordingly, ends of the handrails 237, 239, 241 are fixedly attached to, mounted to, and supported by the respective subpanels 231, 233, 235. Further, as shown, the second subpanel 233 of the first elevator car wall panel 227 includes an operation or control section 243. The control section 243, as shown, includes a number of buttons that are used to enable a passenger to select a destination floor, and may also include emergency buttons, or other buttons as known in the art.

The elevator car wall panels can be fixedly and semi-permanently installed to an elevator car structural panel or frame. For example, screws, bolts, or other fasteners can be used to fasten the panels to the elevator car structural panel. However, such configurations may not allow easy changing and/or replacement of such elevator car wall panels. Further, such configurations, due to the difficulty in replacing or changing the elevator car wall panels, can prevent or make difficult customization of the elevator car wall panels. Thus, changing an aesthetic of an elevator car wall panel may be difficult. Accordingly, embodiments provided herein are directed to elevator car wall panels and associated systems that enable easy installation, exchange, replacement, and/or access to components behind elevator car wall panels.

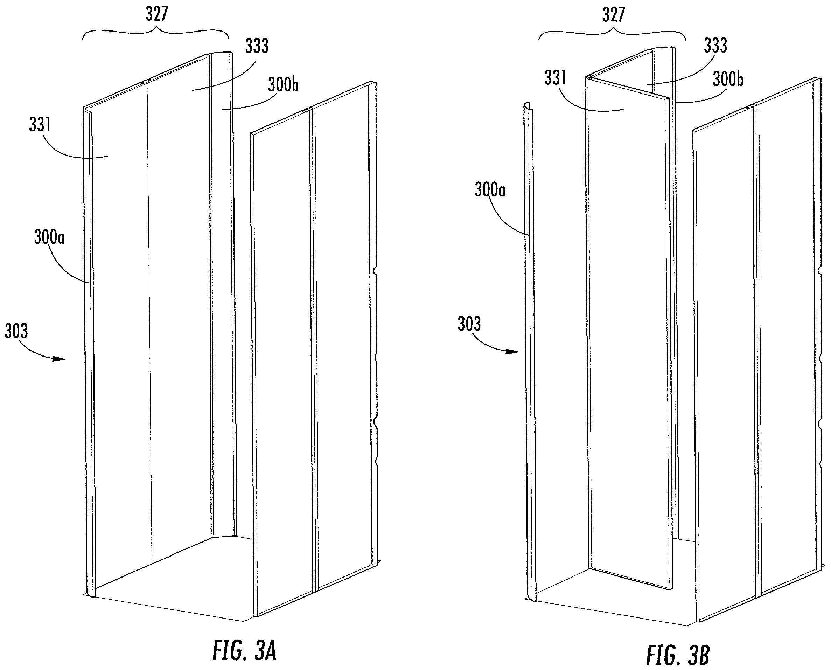

Turning to FIGS. 3A-3B, an example of an elevator car 303 having an openable elevator car wall panel 327 having a first subpanel 331 and a second subpanel 333 is shown. FIG. 3A illustrates the first subpanel 331 in a closed position and FIG. 3B illustrates the first subpanel 331 in an open position. As illustratively shown, the elevator car 303 is equipped with panel securing assemblies 300a, 300b, with a first panel securing assembly 300a removably fixing the first subpanel 331 in the closed position and a second securing element 300b removably fixing the second subpanel 333 in the closed position. One or both of the panel securing assemblies 300a, 300b can be removed to enable a mechanic or other person to easily install, exchange, replace, and/or access to components behind the subpanels 331, 333.

In accordance with embodiments of the present disclosure, the panel securing assemblies are removable decorative angles that provide securing function to the panels/subpanels while also providing an aesthetic corner or angle within the interior of the elevator car. The panel securing assemblies are removably fixable to a portion of a frame of an elevator car and/or are mountable to two perpendicular panels/subpanels at the corner of an elevator car.

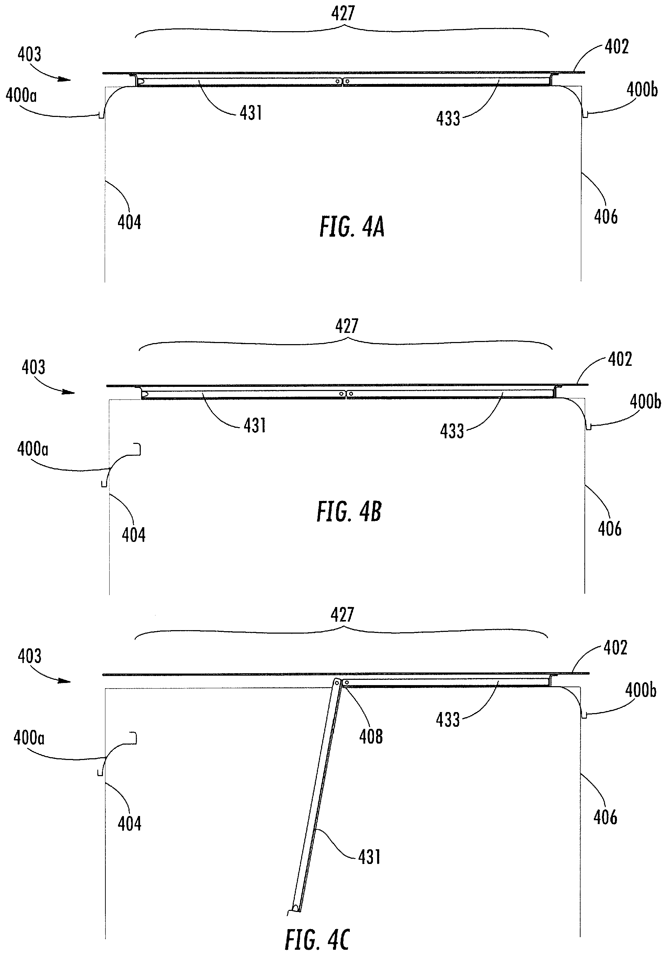

Turning to FIGS. 4A-4C, top-down illustrations of a configuration having panel securing assemblies 400a, 400b used to removably fix subpanels 431, 433 of an elevator car wall panel 427 are shown. FIG. 4A illustrates the panel securing assemblies 400a, 400b in fixed positions wherein the first and second subpanels 431, 433 are securely mounted to a first frame portion 402. As shown, a first panel securing assembly 400a engages with the first subpanel 431, the first frame portion 402, and a second frame portion 404 to thus secure the first subpanel 431 in place. Similarly, a second panel securing assembly 400b engages with the second subpanel 433, the first frame portion 402, and a third frame portion 406 to thus secure the second subpanel 433 in place. The first frame portion 402 and the second frame portion 404 define a corner of the elevator car 403 and the first frame portion 402 and the third frame portion 406 define another corner of the elevator car 403. The panel securing assemblies 400a, 400b are designed to fit within the corners of the elevator car 403 and provide an aesthetic corner that also provides fixation of elevator car wall panels to the frame of the elevator car 403.

In FIG. 4B, the first panel securing assembly 400a is removed from engagement with the first subpanel 431, the first frame portion 402, and the second frame portion 404. Such removal allows for the first subpanel 431 to be moved, such as shown in FIG. 4C, illustrating the first subpanel 431 rotated about a hinge 408 that is located between the first and second subpanels 431, 433. The second panel securing assembly 400b can be similarly removed to allow opening and/or movement of the second subpanel 433. Further, both panel securing assemblies 400a, 400b can be removed to enable removal of the entire elevator car wall panel 427. Additionally, although shown with a single elevator car wall panel 427 having the panel securing assemblies 400a, 400b, those of skill in the art will appreciate that other panels within the elevator car 403 can have panel securing assemblies in accordance with the present disclosure. Further, although shown with both the first and second subpanels 431, 433 having panel securing assemblies, in some embodiments, only one of the two subpanels 431, 433 may be installed with a panel securing assembly of the present disclosure. Further, although shown with a rotating or hinged panel configuration, those of skill in the art will appreciate that other panel configurations may be employed without departing from the scope of the present disclosure.

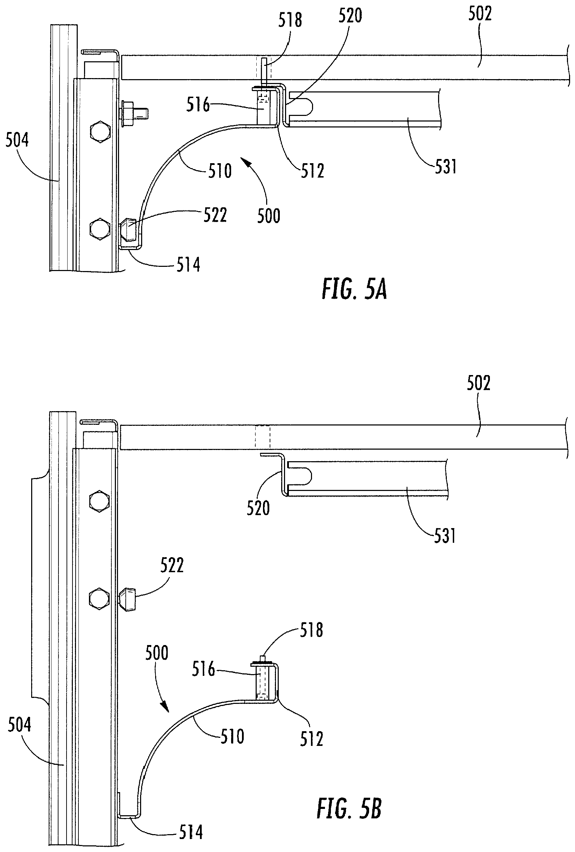

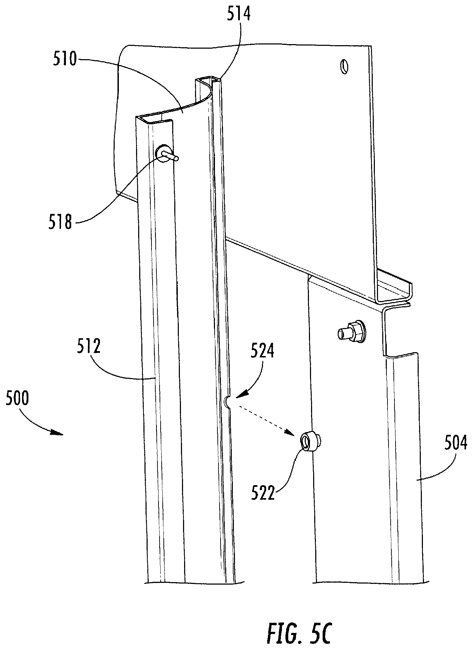

Turning now to FIGS. 5A-5C, schematic illustrations of a panel securing assembly 500 in accordance with an embodiment of the present disclosure are shown. FIG. 5A illustrates a top-down illustration of the panel securing assembly 500 in a first position, fixedly securing a subpanel 531 to a first frame portion 502 and relative to a second frame portion 504. FIG. 5B illustrates the panel securing assembly 500 removed from the first position to enable opening of the subpanel 531. FIG. 5C is an isometric illustration illustrating how the panel securing assembly 500 engages with the second frame portion 504.

As shown, the panel securing assembly 500 has a body 510 with a fastener attachment structure 512 at a first end and an engagement attachment structure 514 at a second end. The body 510 is a surface that is configured to define a corner aesthetic of an elevator car, such as providing a curved corner feature within the elevator car.

The fastener attachment structure 512, as shown, is a bracket or flange having a fastener support 516 arranged therewith. A fastener 518 is retained within the fastener support 516 to enable engagement between the panel securing assembly 500 and the first frame portion 502. As shown, the fastener 518 is arranged to pass through a subpanel flange 520 that is part of the subpanel 531 and into engagement with the first frame portion 502.

The engagement attachment structure 514 at the second end of the body 510 is configured to engage with a positioning element 522. The positioning element 522 is fixedly attached to the second frame portion 504 to provide accurate placement of the panel securing assembly 500 relative to the subpanel 531, such as to align an aperture within the subpanel flange 520 with an aperture with the first frame portion 502 to allow for the fastener 518 to engage therein.

As shown in FIG. 5C, the engagement attachment structure 514 is a bracket or flange that includes an alignment feature 524. The alignment feature 524 can slidingly engage with the positioning element 522 to ensure proper installation of the panel securing assembly 500.

Although shown herein with a body having a curved shape, those of skill in the art will appreciate that the body of the panel securing assemblies of the present disclosure can take any shape. For example, rather than a curved shape, a stepped or angled contour or shape can be employed depending on the desired aesthetic for the corner of the elevator car interior. Further, although shown with a single fastener 518 in the embodiment of FIGS. 5A-5C, any number of fasteners and associated structures can be employed without departing from the scope of the present disclosure. For example, in some embodiments, two fasteners can be employed with a first fastener located close to the top of the panel securing assembly (e.g., near the ceiling of an elevator car) and a second fastener located close to the bottom of the panel securing assembly (e.g., near the floor of an elevator car).

Those of skill in the art will appreciate that various example embodiments are shown and described herein, each having certain features in the particular embodiments, but the present disclosure is not thus limited. That is, features of the various embodiments can be exchanged, altered, or otherwise combined in different combinations without departing from the scope of the present disclosure. Further, additional features and/or components can be incorporated into customizable elevator handrails as provided herein without departing from the scope of the present disclosure.

Advantageously, embodiments described herein provide elevator wall panel systems that allow for easy installation and/or replacement and/or access to components behind elevator car wall panels while at the same time providing aesthetic corners within the elevator cars.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

Accordingly, the present disclosure is not to be seen as limited by the foregoing description, but is only limited by the scope of the appended claims.

## Claims

1. A panel securing assembly for an elevator car, the panel securing assembly comprising:
a body with a first end and a second end;
a fastener attachment structure located at the first end and configured to engage with a wall panel and a frame of an elevator car; and
an engagement attachment structure located at the second end and configured to engage with the frame of the elevator car,
wherein the body defines a corner surface within the elevator car when installed to the wall panel and frame.

2. The panel securing assembly of claim 1, wherein the fastener attachment structure includes a fastener support and a fastener passing through the fastener support, the fastener engageable with the frame.

3. An elevator car comprising:
an elevator car frame having a first frame portion and a second frame portion, wherein the first and second frame portions define a corner of the elevator car;
a wall panel removably attachable to the elevator car frame; and
a panel securing assembly in accordance with any preceding claim removably attaching the wall panel to the elevator car frame and defining a corner surface of the elevator car.

4. The elevator car of claim 3, wherein the wall panel includes a first subpanel and a second subpanel, and wherein the panel securing assembly removably fixes the first subpanel to the first frame portion.

5. The elevator car of claim 4, wherein the panel securing assembly removably fixes the second subpanel to the second frame portion.

6. The elevator car of any of claims 3-5, wherein the elevator car frame comprises a third frame portion, the first and third frame portions defining a second corner of the elevator car, the elevator car further comprising:
a second panel securing assembly, the second panel securing assembly removably attaching the second subpanel to the first frame portion, wherein the second panel securing assembly comprising:
a second assembly body with a first end and a second end;
a second assembly fastener attachment structure located at the first end of the second assembly and configured to engage with the second subpanel and the first frame portion; and
a second assembly engagement attachment structure located at the second end of the second assembly and configured to engage with the third frame portion,
wherein the second assembly body defines a second corner surface within the elevator car when installed to the second subpanel and the third frame portion.

7. The elevator car of any of claims 3-6, wherein the second frame portion includes a positioning element, the engagement attachment structure engageable with the positioning element.

8. The elevator car of claim 7, wherein the engagement attachment structure includes an alignment feature that engages with the positioning element.

9. The elevator car of any of the preceding claims, wherein the body is curved to define a curved corner surface of the elevator car.

10. The elevator car of any of the preceding claims, wherein the wall panel includes a panel flange, the fastener attachment structure engageable with the panel flange to secure the wall panel to the first frame portion.
